# EUROPÄISCHE PATENTSCHRIFT

(11) **EP 2 912 085 B1**
(45) Veröffentlichungstag und Bekanntmachung des Hinweises auf die Patenterteilung: **09.08.2017**
(21) Anmeldenummer: 13779600.9
(22) Anmeldetag: 22.10.2013
(51) Int. Cl.: C08G 18/67, C04B 26/16, C08G 18/32, C08L 75/16

(54) **HARZMISCHUNG AUF VINYLESTERURETHANHARZ-BASIS UND DEREN VERWENDUNG**
RESIN MIXTURE BASED ON VINYL ESTER URETHANE RESIN AND USE THEREOF
MÉLANGE DE RÉSINES À BASE DE RÉSINE VINYLESTER-URÉTHANE ET SON UTILISATION

(30) Priorität: 24.10.2012 DE 102012219476
(43) Veröffentlichungstag der Anmeldung: 02.09.2015
(73) Patentinhaber: Hilti Aktiengesellschaft, 9494 Schaan (LI)
(72) Erfinder: LEITNER, Michael, 86899 Landsberg (DE)
(74) Vertreter: Hilti Aktiengesellschaft Corporate Intellectual Property
(86) Internationale Anmeldenummer: PCT/EP2013/072018
(87) Internationale Veröffentlichungsnummer: WO 2014/064072

(56) Entgegenhaltungen:
- EP-A1- 0 713 015
- EP-A1- 2 433 975

## Beschreibung

Die Erfindung betrifft eine Harzmischung mit einem Vinylesterurethanharz auf Basis nachwachsender Rohstoffe, insbesondere einem Dianhydrohexitol-basierten Vinylesterurethanharz als Basisharz, einen diese Harzmischung enthaltenden Reaktionsharzmörtel sowie dessen Verwendung zur chemischen Befestigung.

Die Verwendung von Reaktionsharzmörteln auf Basis radikalisch härtbarer Verbindungen als Bindemittel ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente die Harzmischung und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze und ungesättigte Polyesterharze eingesetzt.

Als Basisharze werden aufgrund ihrer vorteilhaften Eigenschaften Vinylesterharze und insbesondere Vinylesterurethanharze eingesetzt, die durch monomere oder polymere aromatische Diisocyanate und Hydroxy-substituierte Methacrylate, wie Hydroxyalkylmethacrylat, erhältlich sind. Die EP 0713015 B1 beispielsweise beschreibt Dübelmassen mit ungesättigten Polyesterharzen, Vinylesterharzen einschließlich Vinylesterurethanharzen als Basisharze. Die Verbindungen derartiger Systeme basieren auf der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Die Aufgabe der Erfindung liegt nun darin, einen Reaktionsharzmörtel für die chemische Befestigungstechnik bereitzustellen, dessen Harzkomponente ein Basisharz und ggf. weitere Bestandteile, wie Reaktivverdünner, enthält, die einen sehr hohen Anteil an Kohlenstoff aus nachwachsenden Rohstoffen aufweisen.

Diese Aufgabe wird gelöst, indem als Basisharz ein Vinylesterurethanharz auf Basis einer Dianhydrohexitol-Verbindung verwendet wird. Dies hat den Vorteil, dass zur Synthese des Basisharzes auf Ausgangsverbindungen zurückgegriffen werden kann, die in ausreichender Menge und Qualität aus nachwachsenden Rohstoffen erhalten werden können.

Zum besseren Verständnis der Erfindung werden die folgenden Erläuterungen der hierin verwendeten Terminologie als sinnvoll erachtet. Im Sinne der Erfindung bedeutet:
- *"Basisharz"* die reine, härtende bzw. härtbare Verbindung, die für sich oder mit Reaktionsmitteln, wie Härter, Beschleuniger und dergleichen (nicht im Basisharz enthalten), durch Polymerisation härten; die härtbaren Verbindungen können Monomere, Dimere, Oligomere und Präpolymere sein;
- *"Harz-Masterbatch"* das Produkt der Herstellung des Basisharzes nach der Synthese (ohne Isolierung des Basisharzes) welches Reaktivverdünner, Stabilisatoren und Katalysatoren enthalten kann (auch Syntheselösung);
- *"Harzmischung"* eine Mischung aus dem Harz-Masterbatch und Beschleunigern sowie Stabilisatoren und ggf. weiteren Reaktivverdünnern; dieser Begriff wird gleichbedeutend mit dem Begriff *"organisches Bindemittel"* verwendet;
- *"Reaktionsharzmörtel"* eine Mischung aus Harzmischung und anorganischen Zuschlagstoffen; hierfür wird gleichbedeutend der Begriff "A Komponente" verwendet;
- *"Härtungsmittel"* Stoffe, welche die Polymerisation (das Härten) des Basisharzes bewirken;
- *"Härter"* eine Mischung aus Härtungsmittel und organischen und/oder anorganischen Zuschlagstoffen; hierfür wird gleichbedeutend der Begriff "B Komponente" verwendet;
- *"Beschleuniger"* eine zur Beschleunigung der Polymerisationsreaktion (Härtung) fähige Verbindung, die dazu dient, die Bildung des Radikalstarters zu beschleunigen;
- *"Polymerisationsinhibitor"* eine zur Inhibierung der Polymerisationsreaktion (Härtung) fähige Verbindung, die einmal dazu dient, die Polymerisationsreaktion und damit ein unerwünschtes vorzeitiges Polymerisieren der radikalisch polymerisierbaren Verbindung während der Lagerung zu vermeiden, wobei diese Verbindungen üblicherweise in so geringen Mengen eingesetzt werden, dass die Gelzeit nicht beeinflusst wird; anderersetis dient der Polymerisationsinhibitor dazu, die Polymerisationsreaktion unmittelbar nach der Zugabe des Härtungsmittels zu verzögern, wobei diese Verbindungen üblicherweise in solchen Mengen eingesetzt werden, dass die Gelzeit beeinflusst wird;
- *"Reaktivverdünner"* flüssige oder niedrigviskose Basisharze, welche andere Basisharze, den Harz-Masterbatch oder die Harzmischung verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil des gehärteten Masse (Mörtel) werden.
- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht. Dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Gelzeitdrift"* (für einen bestimmten ausgewählten Zeitraum, zum Beispiel 30 oder 60 Tage), bezeichnet das Phänomen, dass, wenn die Härtung zu einem anderen Zeitpunkt als zu dem Referenz-Standardzeitpunkt der Härtung, beispielsweise 24 Stunden nach der Herstellung des Reaktionsharzes, bzw. der Reaktionsharzmasse, die beobachtete Gelzeit von der zum Zeitpunkt der Referenz abweicht;
- *"Mörtelmasse"* bezeichnet eine Formulierung, die neben der Reaktionsharzmasse weitere organische und/oder anorganische Füllstoffe enthält und die als solches direkt zur chemischen Befestigung verwendet werden kann;
- *"Zweikomponenten-Mörtelsystem"* wird ein System bezeichnet, dass eine A Komponente, den Reaktionsharzmörtel, und eine B Komponente, den Härter, umfasst, wobei die beiden Komponenten reaktionsinhibierend getrennt gelagert sind, so dass eine Härtung des Reaktionsharzmörtels erst nach deren Mischen erfolgt;
- *"(Meth)acryl...*/*...(meth)acryl...",* dass sowohl die "Methacryl.../...methacryl..."- als auch die "Acryl.../...acryl..."-Verbindungen umfasst sein sollen;
- *"Vinylesterurethane"* Vinylester, deren sekundäre Hydroxylgruppen in einer Polyaddition mit Polyisocyanaten umgesetzt wurden, woraus sich Urethan-Brücken ergeben;
- *"nachwachsende Rohstoffe"* Rohstoffe, insbesondere organische Stoffe pflanzlichen oder tierischen Ursprungs, die ganz oder in Teilen als Rohstoffe für die Industrie genutzt werden und die im Gegensatz zu fossilen Rohstoffen biologisch erneuerbar sind, d.h. sich in überschaubaren Zeiträumen erneuern; beinhalten nicht-mineralische oder nicht-fossile Rohstoffe, die eine Verwendung im industriellen oder gewerblichen Verarbeitungsprozess erfahren können;
- *"kalthärtend",* dass die Harzmischungen und Reaktionsharzmörtel bei Raumtemperatur vollständig aushärten können.

Reaktionsharzmörtel werden in der Regel herstellt, indem die zur Herstellung des Basisharzes erforderlichen Ausgangsverbindungen gegebenenfalls zusammen mit Katalysatoren und Lösungsmitteln, insbesondere Reaktivverdünner, in einem Reaktor gegeben und miteinander zur Reaktion gebracht werden. Nach Beendigung der Reaktion und gegebenenfalls bereits zu Beginn der Reaktion werden zu dem Reaktionsgemisch Polymerisationsinhibitoren für die Lagerstabilität gegeben, wodurch der sogenannte Harz-Masterbatch erhalten wird. Zu dem Harz-Masterbatch werden häufig Beschleuniger für die Härtung des Basisharzes, gegebenenfalls weitere Polymerisationsinhibitoren, die gleich oder ungleich dem Polymerisationsinhibitor für die Lagerstabilität sein können, zur Einstellung der Gelzeit, und gegebenenfalls weiteres Lösungsmittel, insbesondere Reaktivverdünner, gegeben, wodurch die Harzmischung erhalten wird. Diese Harzmischung wird zur Einstellung verschiedener Eigenschaften, wie der Rheologie und der Konzentration des Basisharzes, mit anorganischen und/oder organischen Zuschlagstoffen versetzt, wodurch der Reaktionsharzmörtel erhalten wird.

Eine bevorzugte Harzmischung enthält dementsprechend mindestens ein Basisharz, mindestens einen Reaktivverdünner, mindestens einen Beschleuniger, mindestens einen Polymerisationsinhibitor. Ein Reaktionsharzmörtel enthält neben der eben beschriebenen Harzmischung anorganische und/oder organische Zuschlagstoffe, wobei anorganische Zuschlagstoffe besonders bevorzugt sind, wie sie nachfolgend näher beschrieben werden.

Der Erfindung lag die Idee zugrunde, eine Harzmischung bereitzustellen, die ein Basisharz enthält, das aus Ausgangsverbindungen aus Biomasse und damit aus nachwachsenden Rohstoffen hergestellt werden kann. Dementsprechend wurden die Ausgangsverbindungen entsprechend ihrem Potential ausgewählt, aus nachwachsenden Rohstoffen erhältlich zu sein.

Ein erster Gegenstand der Erfindung betriff eine Harzmischung mit einem Vinylesterurethanharz als Basisharz, wobei das Vinylesterurethanharz durch (i) Umsetzen einer Dianhydrohexitol-Verbindung mit einem Diisocyanat und anschließendes (ii) Umsetzen des erhaltenen Produkts mit einem Hydroxy-substituierten (Meth)acrylat erhältlich ist.

Erstaunlicherweise ist es gelungen, auf Basis eines Dianhydrohexitol-basierten Vinylesterurethanharzes als Basisharz einen Reaktionsharzmörtel bereitzustellen, der eine annehmbare Verbundtragfähigkeit aufweist und sich daher beispielsweise als organisches Bindemittel für die chemische Befestigungstechnik eignet.

Die üblicherweise als Ausgangsverbindungen für die Vinylesterurethanharz-Synthese eingesetzten Diisocyanate werden erfindungsgemäß durch Umsetzung einer Dihydroxyverbindung mit einem Diisocyanat erhalten, so dass die Produkte notwendigerweise Isocyanatgruppen am Ende des Moleküls und zwei Urethangruppen in der Hauptkette des Moleküls aufweisen. Zweckmäßig werden pro Mol Dihydroxyverbindung mindestens zwei Mole Diisocyanat eingesetzt, so dass jeweils eine Isocyanatgruppe des Diisocyanats mit einer Hydroxygruppe der Dihydroxyverbindung unter Bildung einer Urethangruppe reagiert. Bevorzugt wird jedoch das Diisocyanat im leichten Überschuss zugegeben, um eine Oligomerisierung weitgehend zu verhindern. Die Isocyanat-Endgruppen werden jeweils mit einem Hydroxy-substituierten (Meth)acrylat umgesetzt.

Damit die Ausgangsverbindungen aus nachwachsenden Rohstoffen erhalten werden können, ist die Dihydroxyverbindung erfindungsgemäß eine Dianhydrohexitol-Verbindung. Dianhydrohexitol-Verbindungen, genauer 1,4:3,6-Dianhydrohexitol-Verbindungen, sind Nebenprodukte der Stärkeindustrie. Sie sind beispielsweise durch Dehydrierung von D-Hexitolen erhältlich, die wiederum durch einfache Reduktion aus Hexosezuckern erhältlich sind. Die Dianhydrohexitol-Verbindungen sind somit aus Biomasse erhältliche, chirale Produkte. Abhängig von der Konfiguration der zwei Hydroxygruppen wird zwischen drei Isomeren unterschieden, dem Isosorbid (Struktur A), dem Isomannit (Struktur B) und dem Isoidid (Struktur C), die durch Hydrogenierung und anschließende doppelte Dehydrierung aus der D-Glucose, D-Mannose bzw. der L-Fructose erhältlich sind.

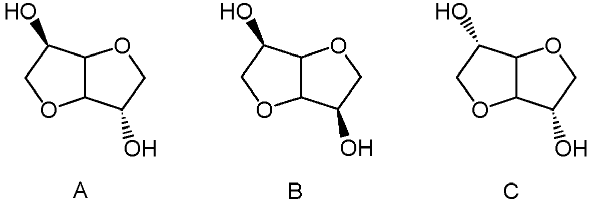

Bei der als Ausgangsstoff verwendeten Dianhydrohexitol-Verbindung kann es sich somit um ein Isosorbid, Isomannit oder Isoidid oder um ein Gemisch dieser Dianhydrohexitol-Verbindungen handeln. Im Folgenden ist demnach unter dem Begriff Dianhydrohexitol-Verbindung die jeweilige diskrete Verbindung wie auch ein beliebiges Gemisch der verschiedenen Einzelverbindungen zu verstehen. Nachdem das Isosorbid am weitesten verbreitet ist, wird es bevorzugt als Ausgangsverbindung für die Umsetzung mit dem Diisocyanat verwendet.

Die Dianhydrohexitol-Verbindungen und Verfahren zu ihrer Herstellung sind an sich bekannt und entsprechende Produkte sind am Markt verfügbar.

Damit auch das Diisocyanat aus nachwachsenden Rohstoffen erhalten werden kann, ist zweckmäßig das Diisocyanat ein aliphatisches Diisocyanat, wie Tetramethylendiisocyanat, Hexamethylendiisocyanat oder Decamethylendiisocyanat.

Die Verwendung von Tetramethylendiisocyanat hat den Vorteil, dass es aus einem C4-Grundbaustein pflanzlichen Ursprungs, nämlich der Bernsteinsäure, erhältlich ist (Chemical Engineering & Technology Special Issue: Change of raw materials, Volume 31, Issue 5, pages 647 (2008) in dem Artikel "Succinic Acid: A New Platform Chemical for Biobased Polymers from Renewable Resources" von I. Bechthold, K. Bretz, S. Kabasci, R. Kopitzky und A. Springer). Die Autoren gehen davon aus, dass Bernsteinsäure eine der zukünftigen Grundchemikalien sein wird, die aus nachwachsenden Rohstoffen erhältlich ist.

Ferner ist mittlerweile auch das Hexamethylendiisocyanat (HDMI) aus nachwachsenden Rohstoffen zugänglich, da gemäß dem US-Patent US 8,421,879 die entsprechende Vorstufe, die Adipinsäure, aus Biomasse zugänglich ist.

Die Verwendung von Decamethylendiisocyanat hat ebenfalls den Vorteil, dass es aus einem C10-Grundbaustein pflanzlichen Ursprungs, nämlich der Sebacinsäure, erhältlich ist. Der aus biobasiertem Rizinusöl erhältliche C10-Grundbaustein ist eingehend in der Literatur beschrieben (European Journal of Lipid Science and Technology, Special Issue: Oil and fats as renewable resources for the chemical industry, Volume 112, Issue 1, Pages 10 (2010), in dem Artikel "Castor oil as a renewable resource for the chemical industry" von Hatice Mutlu und Michael A. R. Meier). Auch hier gehen die Autoren davon aus, dass Rizinusöl eine sehr wertvolle Quelle für nachwachsende Rohstoffe für die chemische Industrie ist.

Daneben können aber auch andere Diisocyanate, die aus nachwachsenden Rohstoffen erhältlich sind, erfindungsgemäß eingesetzt werden, wie beispielsweise Diisocyanate aus Fettsäuren oder aus anderen Quellen, wie in der WO 2011/098272 A2 beschrieben.

Auch die Hydroxy-substituierten (Meth)acrylate können aus nachwachsenden Rohstoffen erhalten werden. Insbesondere handelt es sich dabei um aliphatische Hydroxyalkyl(meth)acrylate, wie Hydroxypropyl(meth)acrylat oder Hydroxyethyl(meth)acrylat, wovon die Methacrylat-Verbindungen besonders bevorzugt sind.

Der zur Synthese des Hydroxypropylmethacrylats erforderliche Propylenglykol kann aus Glycerin erhalten werden (CEPmagazine.org, www.aiche.org/cep (August 2007), in dem Artikel "A Renewable Route to Propylene Glycol" von Suzanne Shelley). Glycerin ist ein wesentliches Nebenprodukt der Herstellung von Biodiesel. Damit ist es für die Herstellung von Propylenglykol eine billige, nachhaltige und umweltfreundliche Alternative zu dem herkömmlichen Rohstoff, der aus Erdöl gewonnen wird.

Der zur Synthese des Hydroxyethylmethacrylats erforderliche Ethylenglykol kann ebenfalls aus Rohstoffen, wie Ethylenoxid und Derivate davon, etwa Glykole, die aus Biomasse, wie Molasse oder Zuckerrohr, erhältlich sind, gewonnen werden.

Die C₂- und C₃-Hydroxyalkylmethacrylate sind am Markt verfügbar.

Daneben können aber auch andere Hydroxy-substituierte (Meth)acrylate, die aus nachwachsenden Rohstoffen erhältlich sind, erfindungsgemäß eingesetzt werden.

Ein besonders bevorzugtes Basisharz hat folgende Formel: 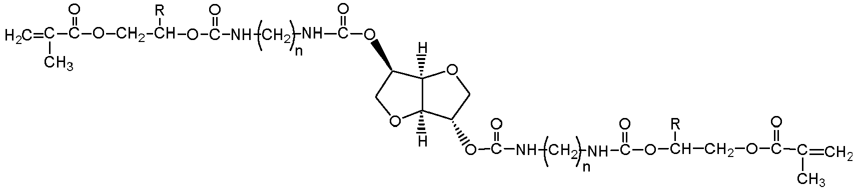 in der n 4, 6 oder 10 ist und R für Wasserstoff oder eine Methylgruppe steht.

Werden alle Ausgangsverbindungen aus nachwachsenden Rohstoffen, wie Biomasse, erhalten und zur Herstellung einer Harzmischung eine 65 Gew.%-ige Lösung aus dem Vinylesterurethanharz in Hydroxypropylmethacrylat oder Hydroxyethylmethacrylat hergestellt, können bis zu 80 % des Kohlenstoffgehalts der Harzmischung aus, nachwachsenden Rohstoffen stammen.

In einer bevorzugten Ausführungsform der Erfindung enthält die Harzmischung weitere niederviskose, radikalisch polymerisierbare Verbindungen, bevorzugt solche, die aus nachwachsenden Rohstoffen erhältlich sind, als Reaktivverdünner, um etwa die Viskosität der Vinylesterurethanharze bzw. der Vorstufen bei deren Herstellung anzupassen, falls erforderlich. Die Reaktivverdünner können in einer Menge von 90 bis 10 Gew.-%, vorzugsweise 70 bis 30 Gew.-%, bezogen auf die Harzmischung, zugegeben werden. In diesem Zusammenhang wird auf die WO 09/156648 A1, die WO 10/061097 A1, die WO 10/079293 A1 und die WO 10/099201 A1, verwiesen, deren Inhalte hiermit in diese Anmeldung aufgenommen werden.

Alternativ kann die Harzmischung jeden geeigneten Reaktivverdünner enthalten. Zweckmäßig enthält die Harzmischung als Reaktivverdünner einen aliphatischen oder aromatischen C₅-C₁₅-(Meth)acrylsäureester, wobei besonders bevorzugt (Meth)acrylsäureester aus der Gruppe ausgewählt werden, bestehend aus Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N*,*N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat; PEG-Di(meth)acrylat, wie PEG200Di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert*-Butyl(meth)acrylat und Norbornyl(meth)acrylat. Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen, wobei die Vertreter davon bevorzugt sind, die aus Grundchemikalien auf Basis nachwachsender Rohstoffe erhältlich sind.

Zur Stabilisierung gegen vorzeitige Polymerisation (Lagerstabilität) und zur Einstellung der Gelzeit und der Reaktivität kann die Harzmischung einen Polymerisationsinhibitor enthalten. Zur Sicherstellung der Lagerstabilität ist der Polymerisationsinhibitor bevorzugt in einer Menge von 0,0005 bis 2 Gew.-%, stärker bevorzugt 0,01 bis 1 Gew.-%, bezogen auf die Harzmischung, enthalten. Zur Einstellung der Gelzeit und der Reaktivität kann die Harzmischung zusätzlich 0,005 bis 3 Gew.-%, vorzugsweise 0,05 bis 1 Gew.-% eines Polymerisationsinhibitors enthalten.

Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind.

Zur Stabilisierung gegen vorzeitige Polymerisation enthalten Harzmischungen und Reaktionsharzmörtel üblicherweise Polymerisationsinhibitoren, wie Hydrochinon, substituierte Hydrochinone, z.B. 4-Methoxyphenol, Phenothiazin, Benzochinon oder tert-Butylbrenzkatechin, wie beispielsweise in der EP 1935860 A1 oder EP 0965619 A1 beschrieben werden, stabile Nitroxylradikalen, auch N-oxyl-Radikale genannt, wie Piperidinyl-N-oxyl oder Tetrahydropyrrol-N-oxyl, wie beispielsweise in der DE 19531649 A1 beschrieben. Besonders bevorzugt wird 4-Hydroxy-2,2,6,6-tetramethylpiperidin-N-oxyl (im Folgenden als Tempol bezeichnet) zur Stabilisierung verwendet, was den Vorteil hat, dass damit auch die Gelzeit eingestellt werden kann.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert-*butylphenol, 2,4,6-Trimethylphenol, 2,4,6-Tris(dimethylaminomethyl)phenol, 4,4'-Thio-bis(3-methyl-6-*tert*-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p*-cresol, Brenzkatechin und Butylbrenzkatechine, wie 4-*tert-*Butylbrenzkatechin, 4,6-Di-*tert*-butylbrenzkatechin, Hydrochinone, wie Hydrochinon, 2-Methylhydrochinon, 2-*tert*-Butylhydrochinon, 2,5-Di-*tert*-butylhydrochinon, 2,6-Di-*tert-*butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren, kommen vorzugsweise Phenothiazine, wie Phenothiazin und/oder Derivate oder Kombinationen davon, oder stabile organische Radikale, wie Galvinoxyl- und *N*-oxyl-Radikale in Betracht.

Geeignete stabile *N*-oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen. Ferner können in para-Position zur Hydroxylgruppe substituierte Pyrimidinol- oder Pyridinol-Verbindungen, wie sie in der nicht vorveröffentlichten Patentschrift Anmeldung DE 10 2011 077 248 B1 beschrieben sind als Stabilisatoren verwendet werden.

Die Polymerisationsinhibitoren können, abhängig von den gewünschten Eigenschaften und der Verwendung der Harzmischung, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelierzeit der Reaktionsharzformulierung zeigt.

Bevorzugt wird die Härtung des Harzbestandteils mit einem Radikalinitiator, wie einem Peroxid initiiert. Neben dem Radikalinitiator kann zusätzlich ein Beschleuniger verwendet werden. Hierdurch werden schnellhärtende Reaktionsharzmörtel erhalten, die kalthärtend sind, d.h. die bei Raumtemperatur härten. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, a-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diaminodimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxylalkyl)anilin mit Dicarbonsäuren oder durch Polyaddition von Ethylenoxid an diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Mangan- oder Zirkoniumcarboxylat.

Sofern ein Beschleuniger verwendet wird, wird er in einer Menge von 0,01 bis 10 Gew.-%, bevorzugt 0,2 bis 5 Gew.-%, bezogen auf die Harzmischung, eingesetzt.

Ein weiterer Gegenstand der Erfindung ist ein Reaktionsharzmörtel, der neben der eben beschriebenen Harzmischung, dem organischen Bindemittel, anorganische und/oder organische Zuschlagstoffe enthält, wie Füllstoffe und/oder weitere Additive.

Der Anteil der Harzmischung in dem Reaktionsharzmörtel beträgt bevorzugt 10 bis 60 Gew.-%, stärker bevorzugt 20 bis 30 Gew.-%, bezogen auf den Reaktionsharzmörtel. Dementsprechend beträgt der Anteil der Zuschlagstoffe bevorzugt 90 bis 40 Gew.-%, stärker bevorzugt 80 bis 70 Gew.-%, bezogen auf den Reaktionsharzmörtel.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden. Bevorzugt und deutlicher verstärkend wirken sich jedoch die globulären, inerten Stoffe (Kugelform) aus.

Weitere denkbare Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

In einer bevorzugten Ausführungsform der Erfindung ist der erfindungsgemäße Reaktionsharzmörtel als Zwei- oder Mehrkomponenten-System, insbesondere Zweikomponenten-System konfektioniert, wobei der Harzbestandteil und der Härterbestandteil reaktionsinhibierend getrennt angeordnet sind. Dementsprechend enthält eine erste Komponente, die A Komponente, den Reaktionsharzmörtel und eine zweite Komponente, die B Komponente, den Härter. Hierdurch wird erreicht, dass die härtbaren Verbindungen und das Härtungsmittel erst unmittelbar vor der Anwendung miteinander gemischt werden und die Härtungsreaktion auslösen.

Der Härter enthält das Härtungsmittel zur Initiierung der Polymerisation (Härtung) des Harzbestandteils. Dieses ist, wie bereits erwähnt, ein Radikalinitiator, bevorzugt ein Peroxid.

Alle dem Fachmann bekannten Peroxide, die zum Härten von Vinylesterharzen verwendet werden, können erfindungsgemäß zur Härtung der Dianhydrohexitol-basierten Vinylesterurethanharze eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel - C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie *tert*-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Bevorzugt enthält der Härter des Zweikomponenten-Mörtelsystems ferner anorganische Zuschlagstoffe, wobei die Zuschlagstoffe dieselben sind, wie sie dem Reaktionsharzmörtel zugegeben werden können.

Bei einer besonders bevorzugten Ausführungsform des Zweikomponenten-Mörtelsystems enthält die A Komponente neben dem Reaktionsharzmörtel zusätzlich noch eine hydraulisch abbindende oder polykondensierbare anorganische Verbindung und die B Komponente neben dem Härtungsmittel noch Wasser. Derartige Mörtelmassen sind ausführlich in der DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

Das Zweikomponenten-Mörtelsystem umfasst bevorzugt die A Komponente und die B Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Mörtelsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Die erfindungsgemäße Harzmischung, der Reaktionsharzmörtel sowie das Zweikomponenten-Mörtelsystem finden vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Die folgenden Beispiele dienen der weiteren Erläuterung der Erfindung.

### AUSFÜHRUNGSBEISPIELE

### A) Harzmasterbatch Synthesen

### A1) Verwendung von Tetramethylendiisocyanat (TMDI)

### Beispiel A1.1

In einen 500mL Dreihalskolben werden 260g 1,3-Propandioldimethacrylat (Sarbio6200; Sartomer) und 50g TMDI vorgelegt und mit 30mg Dioctylzinndilaurat (Tegokat216; Goldschmidt Industrial Chemical Corporation), 20mg Butylhydroxytoluol (BHT) sowie 40mg 4-Hydroxy-2,2,6,6-tetramethylpiperidin-N-oxyl (Tempol) versetzt. Die Lösung wird bei 60°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 70°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 50g Hydroxypropylmethacrylat (HPMA) (VISIOMER® HPMA 98; Evonik Industries) über einen Zeitraum von 60min zugetropft, und weiter bei 80°C solange gerührt, bis der NCO Gehalt bei weniger als 0,2% liegt, gemessen nach DIN EN 1242.

### Beispiel A1.2

In einen 500mL Dreihalskolben werden 250g 1,4-Butandioldimethacrylat und 40g TMDI vorgelegt und mit 60mg Dioctylzinndilaurat (Tegokat216), 40mg BHT sowie 90mg Tempol versetzt. Die Lösung wird bei 60°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 70°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 40g HPMA über einen Zeitraum von 60min zugetropft, und weiter bei 80°C solange gerührt, bis der NCO Gehalt bei weniger als 0,2% liegt, gemessen nach DIN EN 1242.

### A2) Verwendung von Hexamethylendiisocyanat (HMDI)

### Beispiel A2.1

In einen 500mL Dreihalskolben werden 130g 1,3-Propandioldimethacrylat (Sarbio6200), 130g 1,4-Butandioldimethacrylat und 50g HMDI vorgelegt und mit 30mg Dioctylzinndilaurat (Tegokat216), 20mg BHT sowie 40mg Tempol versetzt. Die Lösung wird bei 60°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 70°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 50g HPMA über einen Zeitraum von 60min zugetropft, und weiter bei 80°C solange gerührt, bis der NCO Gehalt bei weniger als 0,2% liegt, gemessen nach DIN EN 1242.

### Beispiel A2.2

In einen 500mL Dreihalskolben werden 250g (2,2-Dimethyl-1,3-dioxolan-4-yl)methyl methacrylat (Solketalmethacrylat) und 45g HMDI vorgelegt und mit 30mg Dioctylzinndilaurat (Tegokat216), 30mg BHT sowie 40mg Tempol versetzt. Die Lösung wird bei 60°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 70°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 45g HPMA über einen Zeitraum von 60min zugetropft, und weiter bei 80°C solange gerührt, bis der NCO Gehalt bei weniger als 0,2% liegt, gemessen nach DIN EN 1242.

### A3) Verwendung von Decamethylendiisocyanat (DMDI)

### Beispiel A3.1

In einen 500mL Dreihalskolben werden 230g 1,3-Propandioldimethacrylat (Sarbio6200) und 60g DMDI vorgelegt und mit 60mg Dioctylzinndilaurat (Tegokat216), 40mg BHT sowie 90mg Tempol versetzt. Die Lösung wird bei 60°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 70°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Zur Viskositätsabsenkung der Mischung wird mit 35g Tetrahydrofurfurylmethacrylat (Sarbio6100) verdünnt. Anschließend werden 40g HPMA über einen Zeitraum von 60min zugetropft, und weiter bei 80°C solange gerührt, bis der NCO Gehalt bei weniger als 0,2% liegt, gemessen nach DIN EN 1242.

### B) Harzmischungen

### B1) Verwendung von Tetramethylendiisocyanat (TMDI)

### Beispiel B1.1

380g des Harzmasterbatch, hergestellt gemäß Beispiel A1.1 werden bei 50°C mit 100g 1,4-Butandioldimethacrylat (BDDMA) sowie mit 2g tert.-Butylbrenzkatechin (tBBK) versetzt und die Gelzeit anschließend bei Raumtemperatur auf 6min unter Zugabe eines aromatischen Amins eingestellt.

### Beispiel B1.2

350g des Harzmasterbatch, hergestellt gemäß Beispiel A1.2 werden bei 50°C mit 90g BDDMA sowie mit 2g tBBK versetzt und die Gelzeit anschließend bei Raumtemperatur auf 6min unter Zugabe eines aromatischen Amins eingestellt.

### B2) Verwendung von Hexamethylendiisocyanat

### Beispiel B2.1

380g des Harzmasterbatch, hergestellt gemäß Beispiel A2.1 werden bei 50°C mit 100g BDDMA sowie mit 2g tBBK versetzt und die Gelzeit anschließend bei Raumtemperatur auf 6min unter Zugabe eines aromatischen Amins eingestellt.

### Beispiel B2.2

360g des Harzmasterbatch, hergestellt gemäß Beispiel A2.2 werden bei 50°C mit 90g BDDMA sowie mit 2g tBBK versetzt und die Gelzeit anschließend bei Raumtemperatur auf 6min unter Zugabe eines aromatischen Amins eingestellt.

### B3) Verwendung von Decamethylendiisocyanat

### Beispiel B3.1

300g des Harzmasterbatch, hergestellt gemäß Beispiel A3.1 werden bei 50°C mit 40g BDDMA sowie mit 2g tBBK versetzt und die Gelzeit anschließend bei Raumtemperatur auf 6min unter Zugabe eines aromatischen Amins eingestellt.

### C) Herstellung der Reaktionsharzmörtel

Zur Herstellung der Hybridmörtel werden die Harzmischungen aus B) mit 30-45 Gewichtsanteilen Quarzsand, 15-25 Gewichtsanteilen Zement und 1-5 Gewichtsanteilen pyrogener Kieselsäure im Dissolver zu einer homogenen Mörtelmasse gemischt.

### D) Härterkomponente

Zur Herstellung der Härterkomponente werden 40 g Dibenzoylperoxid, 250 g Wasser, 25 g pyrogene Kieselsäure, 5 g Schichtsilikat und 700 g Quarzmehl geeigneter Korngrößenverteilung im Dissolver zu einer homogenen Masse gemischt.

Die jeweiligen Reaktionsharzmörtel die Härterkomponente werden im Volumenverhältnis von 5:1 miteinander vermischt und deren Verbundtraglasten gemessen.

### Bestimmung der Versagensverbundspannungen

Zur Bestimmung der Versagensverbundspannung der ausgehärteten Masse verwendet man Ankergewindestangen M12, die in Bohrlöcher in Beton mit einem Durchmesser von 14mm und einer Bohrlochtiefe von 72mm mit den Reaktionsharzmörtel-Zusammensetzungen der Beispiele eingedübelt werden. Hierbei handelte es sich um gut gereinigte hammergebohrte Bohrlöcher, die Aushärtung erfolgte stets bei 20°C. Man ermittelt die mittleren Versagenslasten durch zentrisches Ausziehen der Ankergewindestangen. Es werden jeweils fünf Ankergewindestangen eingedübelt und nach 24h Aushärtung ihre Lastwerte bestimmt. Die hierbei ermittelten Verbundtraglasten σ (N/mm²) sind als Mittelwert in der nachfolgenden Tabelle 1 aufgeführt.

| **Tabelle 1** | **Beispiele** | | | | |
|---|---|---|---|---|---|
| | **C1.1** | **C1.2** | **C2.1** | **C2.2** | **C3.1** |
| Verbundtraglasten σ [N/mm²] | | | | | |
| | 14,0±0,7 | 26,5±1,0 | 13,8±1,3 | 16,6±1,7 | 11,9±1,0 |
| | | | | | |

Am Markt befindliche Produkte mit sehr hohen Verbundtraglasten, wie z.B. das HIT HY200A der Fa. Hilti erreicht unter vergleichbaren Bedingungen Werte von ca. 30N/mm². Damit zeigt sich, dass die untersuchten Prototypen, insbesonders die Variante C1.2 basierend auf dem TMDI ein aussichtsreiches Lastprofil aufweisen.

## Patentansprüche

1. Harzmischung mit einem Vinylesterurethanharz als Basisharz, wobei das Vinylesterurethanharz durch (i) Umsetzen einer Dianhydrohexitol-Verbindung mit einem Diisocyanat und anschließendes (ii) Umsetzen des erhaltenen Produkts mit einem Hydroxy-substituierten (Meth)acrylat erhältlich ist.

2. Harzmischung nach Anspruch 1, wobei pro Mol Dianhydrohexitol-Verbindung mindestens zwei Mole Diisocyanat eingesetzt werden.

3. Harzmischung nach Anspruch 1 oder 2, wobei pro Mol an Produkt aus Umsetzung (i) zwei Mole Hydroxy-substituiertes (Meth)acrylat eingesetzt werden.

4. Harzmischung nach einem der vorhergehenden Ansprüche, wobei die Dianhydrohexitol-Verbindung Isosorbid ist.

5. Harzmischung nach einem der vorhergehenden Ansprüche, wobei das Diisocyanat ein aliphatisches Diisocyanat ist.

6. Harzmischung nach Anspruch 5, wobei das aliphatische Diisocyanat Tetramethylendiisocyanat, Hexamethylendiisocyanat oder Decamethylendiisocyanat ist.

7. Harzmischung nach einem der vorhergehenden Ansprüche, wobei das Hydroxy-substituierte (Meth)acrylat ein Hydroxyalkyl(meth)acrylat ist.

8. Harzmischung nach Anspruch 7, wobei das Hydroxyalkyl(meth)acrylat Hydroxypropyl(meth)acrylat oder Hydroxyethyl(meth)acrylat ist.

9. Harzmischung nach einem der vorhergehenden Ansprüche, wobei die Ausgangsverbindungen zur Herstellung des Basisharzes aus nachwachsenden Rohstoffen erhältlich sind.

10. Harzmischung nach einem der vorhergehenden Ansprüche, wobei bis zu 80 % des Kohlenstoffs aus nachwachsenden Rohstoffen stammen.

11. Reaktionsharzmörtel, enthaltend eine Harzmischung nach einem der Ansprüche 1 bis 10 und anorganische und/oder organische Zuschlagstoffe.

12. Reaktionsharzmörtel nach Anspruch 11, wobei die Zuschlagstoffe unter Füllstoffen und Additiven ausgewählt sind.

13. Reaktionsharzmörtel nach Anspruch 11 oder 12, wobei die Harzmischung in einer Menge von 10 bis 60 Gew.-% enthalten ist.

14. Zweikomponenten-Reaktionsharzmörtel-System, umfassend einen Reaktionsharzmörtel nach einem der Ansprüche 11 bis 13 und einen Härter.

15. Zweikomponenten-Reaktionsharzmörtel-System nach Anspruch 14, wobei der Härter einen Radikalinitiator als Härtungsmittel und gegebenenfalls anorganische und/oder organische Zuschlagstoffe enthält.

16. Verwendung eines Reaktionsharzmörtels nach einem der Ansprüche 11 bis 13 zur chemischen Befestigung.

## Claims

1. Resin mixture with a vinyl ester urethane resin as base resin, in which the vinyl ester urethane resin may be obtained by (i) converting a dianhydrohexitol compound with a diisocyanate and then (ii) converting the product obtained with a hydroxy-substituted (meth)acrylate.

2. Resin mixture according to claim 1, in which at least two moles of diisocyanate are used per mole of dianhydrohexitol compound.

3. Resin mixture according to claim 1 or 2, in which two moles of hydroxy-substituted (meth)acrylate are used per mole of product from conversion (i).

4. Resin mixture according to one of the previous claims, in which the dianhydrohexitol compound is isosorbide.

5. Resin mixture according to one of the previous claims, in which the diisocyanate is an aliphatic diisocyanate.

6. Resin mixture according to claim 5, in which the aliphatic diisocyanate is a tetramethylene diisocyanate, hexamethylene diisocyanate or decamethylene diisocyanate.

7. Resin mixture according to one of the previous claims, in which the hydroxy-substituted (meth)acrylate is a hydroxyalkyl (meth)acrylate.

8. Resin mixture according to claim 7, in which the hydroxyalkyl (meth)acrylate is hydroxypropyl (meth)acrylate or hydroxyethyl (meth)acrylate.

9. Resin mixture according to one of the previous claims, in which the starting compounds for producing the base resin may be obtained from renewable raw materials.

10. Resin mixture according to one of the previous claims, in which up to 80% of the carbon comes from renewable raw materials.

11. Reaction resin mortar, containing a resin mixture according to claims 1 to 10 and anorganic and/or organic aggregates.

12. Reaction resin mortar according to claim 11, in which the aggregates are selected from fillers and additives.

13. Reaction resin mortar according to claim 11 or 12, in which the resin mixture is contained in a quantity of 10 to 60% by weight.

14. Two-component reaction resin mortar system, comprising a reaction resin mortar according to one of claims 11 to 13 and a hardener.

15. Two-component reaction resin mortar system according to claim 14, in which the hardener is a radical initiator as a hargening agent and possibly contains anorganic and/or organic aggregates.

16. Use of a reaction resin mortar according to one of claims 11 to 13 for chemical fastening.

## Revendications

1. Mélange de résines, comprenant une résine d'ester vinylique-uréthanne en tant que résine de base, la résine d'ester vinylique-uréthanne pouvant être obtenue (i) par réaction d'un composé dianhydrohexitol avec un diisocyanate, suivie (ii) de la réaction du produit obtenu avec un (méth)acrylate à substitution hydroxy.

2. Mélange de résines selon la revendication 1, dans lequel on utilise par mole du composé dianhydrohexitol au moins deux moles de diisocyanate.

3. Mélange de résines selon la revendication 1 ou 2, dans lequel on utilise par mole du produit de la réaction (i) deux moles de (méth)acrylate à substitution hydroxy.

4. Mélange de résines selon l'une des revendications précédentes, dans lequel le composé dianhydrohexitol est l'isosorbide.

5. Mélange de résines selon l'une des revendications précédentes, dans lequel le diisocyanate est un diisocyanate aliphatique.

6. Mélange de résines selon la revendication 5, dans lequel le diisocyanate aliphatique est le diisocyanate de tétraméthylène, le diisocyanate d'hexaméthylène ou le diisocyanate de décaméthylène.

7. Mélange de résines selon l'une des revendications précédentes, dans lequel le (méth)acrylate à substitution hydroxy est un (méth)acrylate d'hydroxyalkyle.

8. Mélange de résines selon la revendication 7, dans lequel le (méth)acrylate d'hydroxyalkyle est le (méth)acrylate d'hydroxypropyle ou le (méth)acrylate d'hydroxyéthyle.

9. Mélange de résines selon l'une des revendications précédentes, dans lequel les composés de départ, pour la fabrication de la résine de base, peuvent être obtenus à partir de matières premières renouvelables.

10. Mélange de résines selon l'une des revendications précédentes, dans lequel jusqu'à 80 % du carbone proviennent de matières premières renouvelables.

11. Mortier à base de résine de réaction, contenant un mélange de résines selon l'une des revendications 1 à 10 et des granulats inorganiques et/ou organiques.

12. Mortier à base de résine de réaction selon la revendication 11, dans lequel les granulats sont choisis parmi les charges et les additifs.

13. Mortier à base de résine de réaction selon la revendication 11 ou 12, qui contient le mélange de résines en une quantité de 10 à 60 % en poids.

14. Système de mortier à base de résine de réaction à deux composants, comprenant un mortier à base de résine de réaction selon l'une des revendications 11 à 13 et un durcisseur.

15. Système de mortier à base de résine de réaction à deux composants selon la revendication 14, dans lequel le durcisseur contient un amorceur radicalaire en tant qu'agent de durcissement et éventuellement des granulats inorganiques et/ou organiques.

16. Utilisation d'un mortier à base de résine de réaction selon l'une des revendications 11 à 13 pour une consolidation chimique.
